# EUROPEAN PATENT SPECIFICATION

(11) **EP 2 444 327 B1**
(45) Date of publication and mention of the grant of the patent: **08.10.2014**
(21) Application number: 10731541.8
(22) Date of filing: 31.05.2010
(51) Int. Cl.: B65D 23/10, B29C 65/58, B29C 65/78

(54) **DEVICE FOR PLACING HANDLES ON BOTTLES OR RECEPTACLES, MACHINE THAT INCORPORATES THE DEVICE FOR PLACING A HANDLE ON A BOTTLE OR RECEPTACLE**
VORRICHTUNG ZUM AUFSETZEN VON GRIFFEN AUF FLASCHEN ODER KORBFLASCHEN, DIESE VORRICHTUNG AUFWEISENDE EINRICHTUNG
UN APPAREIL DE MISE EN PLACE DE POIGNEES SUR DES BOUTEILLES OU DES BONBONNES, UNE MACHINE INCORPORANT CET APPAREIL

(30) Priority: 03.06.2009 ES 200901348
(43) Date of publication of application: 25.04.2012
(73) Proprietor: And&Or, S.a., 41100 Coria del Rio (Sevilla) (ES)
(72) Inventor: ORTEGA RUIZ, Antonio, E-41100 Coria del Rio (Sevilla) (ES)
(74) Representative: Capitán García, Maria Nuria
(86) International application number: PCT/ES2010/070364
(87) International publication number: WO 2010/139835

(56) References cited:
- JP-A- 2000 177 741
- JP-A- 2007 284 078

## Description

### OBJECT OF THE INVENTION

This invention has as an object a device for placing a handle on a bottle or demijohn, and a machine that incorporates the device for placing a handle on a bottle or demijohn.

The device for placing a handle on a bottle or demijohn has a series of arms that allow grabbing the handle from handle-feeding means and placing it on a bottle or demijohn.

The machine that incorporates the previous device has handle-feeding means that place each handle in such an arrangement that they allow the handle placing device to grab the handles from said handle-feeding means.

Similarly, the machine that incorporates the device for placing a handle on a bottle or demijohn has bottle or demijohn-feeding means that allow directing such bottles or demijohns to the device for placing handles.

### BACKGROUND OF THE INVENTION

Handles for bottles or demijohns are known in the state of the art that are placed around them and are manufactured independently from the bottles or demijohns.

These handles are not part of the bottles or demijohns, which are generally made by injection moulding in polyethylene terephthalate (PET), since this material does not allow long stretching as would be required to make the handles, so that it is impossible to manufacture the mould that would be required to manufacture such handles. Moreover, it may also be necessary to manufacture the handle in a different colour to that of the bottle, which is usually made in transparent plastic such as PET. Materials such as polyethylene (PE) and polypropylene (PP) allow manufacturing the handle separately by plastic moulding and injection without any difficulty in the colour intended.

Known in the state of the art is Japanese patent with publication number JP2000177741 regarding a handle which can be placed in a container comprising a holding part and a deformable ridge delimited by two engaging projections. The engaging projections of the handle can be inserted into engaging grooves of the container body by elastic deformation of the deformable ridge, which enables reduction of the distance between the engaging projections.

On the other hand, Japanese patent with publication number JP2006131259 relates a device for coupling a handle to a bottle and describes a device for coupling a handle to a recess present in a bottle obtained by an injection moulding process.

This coupling device has a handle feeder that arranges them so that their rear portion is placed downwards and horizontally.

The handles are handed out one by one to a lifting mechanism such that they are placed vertically, that is, so that they are coupled to the bottles.

The handle is then placed using gripping means such that an upper rib on the handles is placed on an upper recess of a cavity in the bottle. Then, pressure means place a lower rib of the handle into a lower recess of the cavity in the bottle. Then, other pressure means place a second upper rib of the handle, joined to it by a central ridge, into a second upper rib of the cavity in the bottle.

Two pressure steps are therefore necessary to assemble the handle on the bottle, and two different pressure means are required to carry out each step, which slows down the assembly process and increases its associated costs due to the large number of components required to carry out said operation.

Similarly, the previous document requires a third means or lifting mechanism in order to place the handle such a position that allows it to be assembled on the bottle, such that the machine that incorporates the handle-placing device on the bottle requires these third means in order to assemble the parts, which increases its complexity.

On the other hand, the handle of the previous document has a central ridge that is bound to only one end of the handle, in this case the lower end, and must be separated from the upper end so that when the second pressure step is applied, this central ridge also puts pressure on the second upper rib. This structure of the handle makes the mould used for its manufacture very complex, since the central ridge must be separated from the top part of the handle when demoulding.

All these drawbacks are overcome by the invention that will now be described regarding a device for placing a handle on a bottle or demijohn that performs the operations of grabbing and positioning the handle on the bottle or demijohn, also regarding the machine that incorporates the device for placing a handle on a bottle or demijohn, the process for placing such a handle on a bottle or demijohn that reduces the number of steps for placing such a handle and has a similar yield as that obtained with machines of greater capacities for the manufacture of containers by injection moulding, which allows it to be incorporated into the production line for the container itself, and regarding a handle that can be placed on a bottle or demijohn with a simple and compact configuration.

### DESCRIPTION OF THE INVENTION

This invention relates to a device for placing a handle on a bottle or demijohn, and a machine that incorporates the device for placing a handle on a bottle or demijohn.

The device for placing handles on a demijohn has at least one secondary arm that has on one end a clamp that allows putting pressure on and deforming the handle on at least one of its ridges that can be deformed, such that the distance between two end ribs on said ridge is reduced and allows coupling the two end ribs of the handle into two opposing recesses of the bottle or demijohn that are provided to house such a handle.

The secondary arm having the clamp is incorporated into a carriage that moves along guides present on a main arm. Said main arm is joined by a pin to a central shaft with rotational ability about a frame or rack.

The movement of the secondary arm-holding carriage along the guides is performed via a tracker that is fixed to the secondary arm-holding carriage that follows the path set by a cam that is fixed to the frame of the device for placing handles.

Due to the geometry of the cam, the tracker and the entire secondary arm-holding carriage bound to it perform an advancing movement towards the position where the clamp of the secondary arm grabs the handle, returns towards the central shaft in order to place itself in the position of insertion of the handle into the bottle or demijohn and returns to place the handle on the bottle.

Similarly, the main arm has a cam that is followed by a tracker that is fixed to the secondary arm where the clamp is, such that the secondary arm that moves with the carriage may rotate due to the shape of the cam when the arm-holding carriage moves.

This cam that de moulding arranged on the main arm has a first straight section that prevents the secondary arm from rotating when the tracker is on this section, and a second curved section that transmits a rotation to the tracker and therefore to the clamp that is bound to the secondary arm.

In this manner, by combining the advancing and returning movement due to the cam present in the frame and the rotational movement due to the cam present on the main arm it is achieved that the secondary arm can advance and return in order to grab the handle, advance and return to place the handle on the bottle, and rotate at a certain angle in order to allow the functions of collection and insertion of the handle on the bottle or demijohn.

The secondary arm in turn has ribs that alternate with the ends of the clamp, such that each of these grips of the clamp is arranged between each rib and vice versa.

In this manner, when the device for placing handles gets close to the handle, the advancing movement is completed with an arrangement of the secondary arm due to the cam of the main arm such that the two ribs hold the inside of the handle on opposite ends, which ends separate the deformable ridge from the rest of the handle.

The handle also comprises a holding ridge that is used by the user when he or she holds the bottle or the bemi john by the handle.

Once the handle has been grabbed by the ridges on the secondary arm, there is a closing movement of the clamp performed by means that transmit the closing movement to the clamp that are present in the secondary arm itself, and a return movement with the resulting rotation of the clamp associated to the secondary arm and the cam of the main arm, the handle changing from the horizontal grabbing position to the tilted insertion position.

Thus, the handle is pressed on at least its deformable ridge so that the distance between the two end ribs on said ridge is reduced and allows coupling them on the two opposing recesses on the bottle or demijohn.

In the following advancing movement, due to the shape of the cam present on the frame, the handle is placed in front of the cavity on the bottle or demijohn that is intended to receive it, while the clamp continues to press upon the handle, holding it and with the ridge containing the end ribs deformed such that the distance between said ribs is shortened.

In a final cross movement of the main arm with respect to the advancing and returning movement of the secondary arm, the clamp places the handle inside the cavity of the bottle or demijohn in order to subsequently stop exerting pressure on at least the deformable ridge, which then recovers, and the end ribs of the handle become inserted in the opposing recesses of the bottle or demijohn.

This cross movement is performed by a rotation of the main arm about the pin that joins it to the central shaft of the frame. This is possible since the main arm is joined by tense elastic means to an element that is external to the main arm.

In the position prior to the positioning of the handle, another cam that is present on the frame releases another tracker that is fixed to the main arm, which then moves in a cross direction to the advancing and return direction of the secondary arm and due to the recovery of the elastic element, this makes the main arm advance up to the insertion position.

The machine that incorporates the previous device has handle-feeding means that place each handle in such an arrangement that they allow the handle placing device to grab the handles from said handle-feeding means.

These handle-feeding means comprise a rotating vibration receptacle that receives the handles, and internal walls with a spiral ramp that allow the handles to climb up the ramp due to the rotation and pushing of one handle on another.

The spiral ramp has elevation stops that allow placing the handle in a vertical position, which is defined as that in which only one of the ridges of the handle is in contact with the spiral ramp. This ridge is the heaviest, since the stop raises the handle by the lighter ridge, due to its lower weight.

Since the vertical arrangement of the handle also allows two variants, since the handle does not have to be symmetrical, there are sensors in the rotating vibratory receptacle that identify when the handle is placed in the correct position to be subsequently grabbed by the clamp present on the secondary arm of the secondary arm-holding carriage.

Should the handle not be in the correct position, the rotating vibratory receptacle has ejection means that would return the handle from the ramp to said receptacle.

At the outlet of the ramp, the machine has transport means that carry the handles towards the device for placing the handle on the demijohn described above.

Similarly, the machine has bottle or demijohn-feeding means that allow directing the bottles or demijohns towards the device for placing handles and bottle or demijohn direction means that withdraw the bottles or demijohns from the device for placing handles once the handle has been placed on the bottle or demijohn.

The machine has sensors along the entire run of the handle that determine whether or not the handle is in the correct position at each moment.

The process for positioning a handle on a bottle or demijohn has the following steps:
- grabbing the handle from transporting means by means of a device for placing a handle on a bottle or demijohn, and
- positioning the handle on the bottle or demijohn by means of said device for placing handles.

The handle that can be placed on a bottle or demijohn comprises a holding ridge and a deformable ridge, defined by two end ribs that can be inserted in two opposing recesses present in a cavity of the bottle or demijohn.

The deformable ridge allows decreasing the distance between the two end ribs.

### DESCRIPTION OF THE DRAWINGS

This specification is supplemented with a set of drawings illustrating the preferred embodiment, which are never intended to limit the invention.

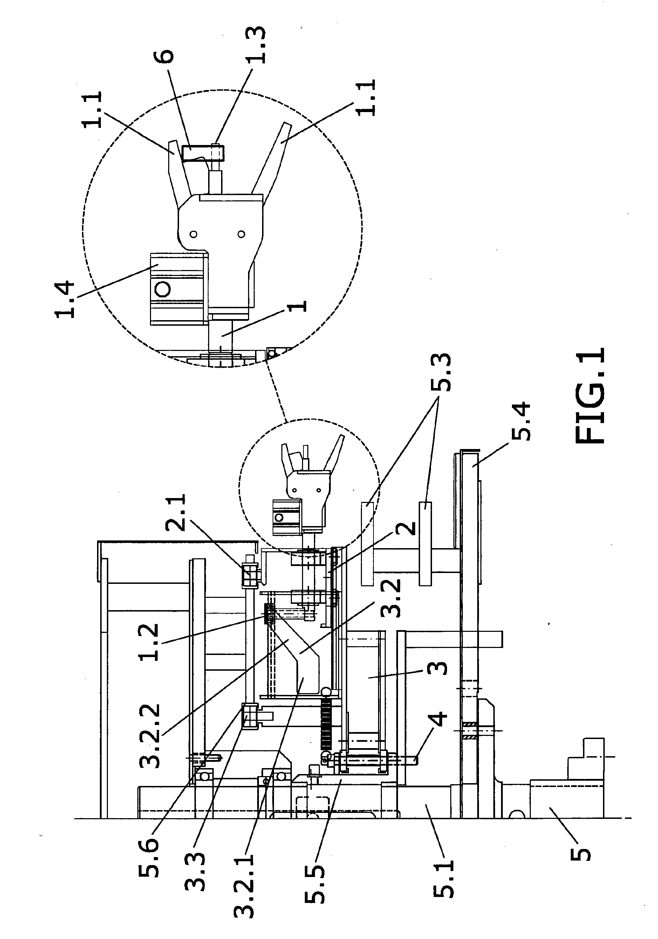

Figure 1 shows an elevation view of the device for placing a handle on a bottle or demijohn showing the clamp grabbing the handle.

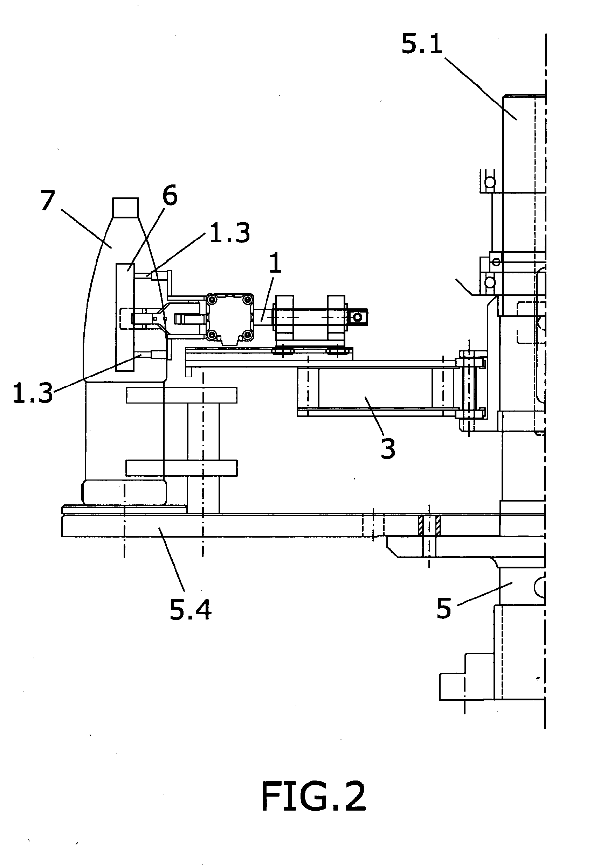

Figure 2 shows an elevation view of the device for placing a handle on a bottle or demijohn that shows the secondary arm carrying the clamp placing the handle on the bottle or demijohn.
Figure 3A shows a plan view with one of the secondary arm-holding carriages, the one located in the upper left quadrant, in the position prior to placing the handle on the or demijohn.
Figure 3B shows a plan view with one of the secondary arm-holding carriages, the one located in the upper left quadrant, in the position of placing the handle on the bottle or demijohn.

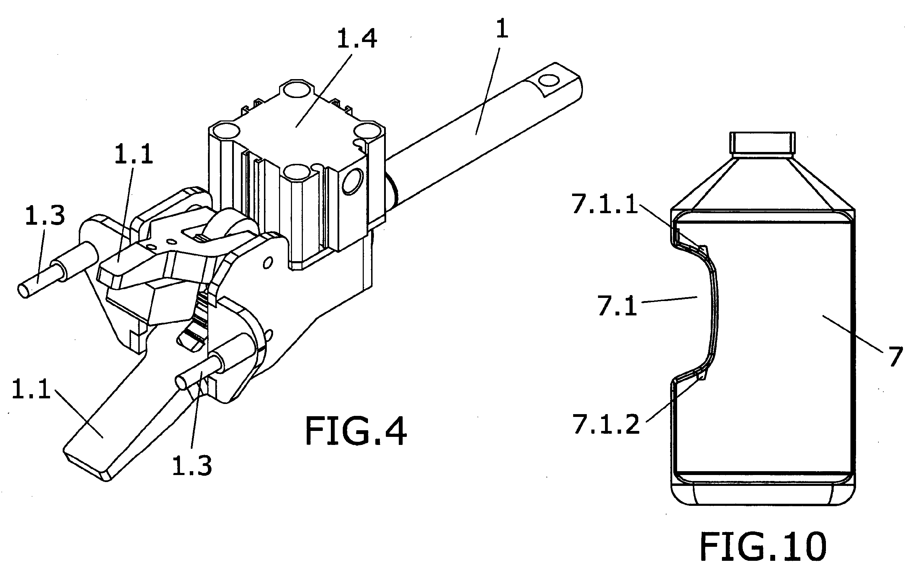

Figure 4 shows a perspective view of the secondary clamp-holding arm of the device for placing a handle on a bottle or demijohn of the present invention.

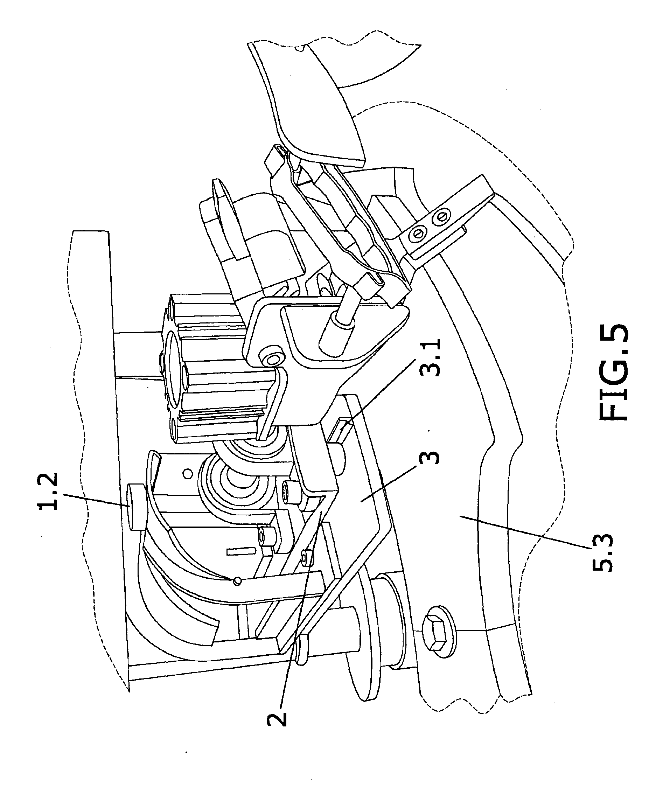

Figure 5 shows a perspective view of one of the secondary arm-holding carriages in which the secondary arm is located in the position shown in Figure 1, that is, grabbing the handle.

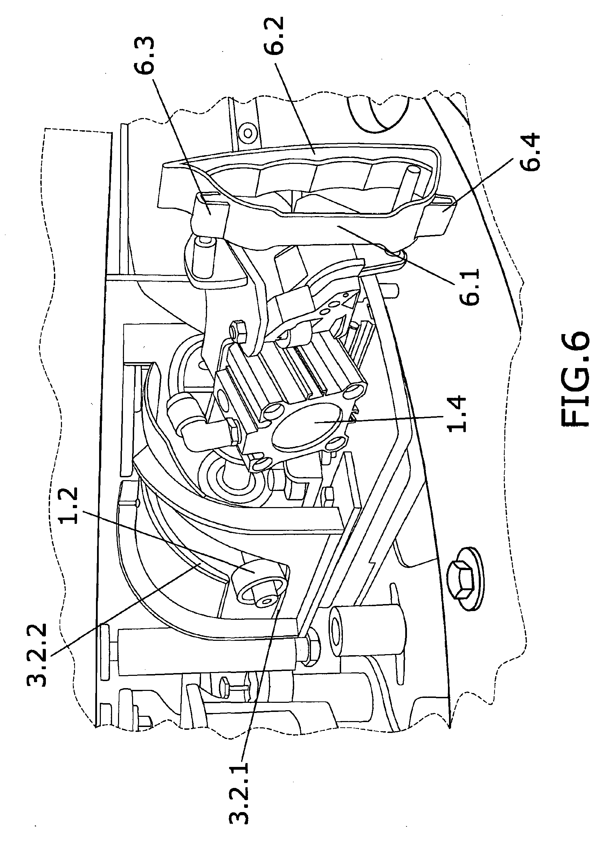

Figure 6 shows a perspective view of one of the secondary arm-holding carriages in which the clamp of the secondary arm is about to compress the handle.

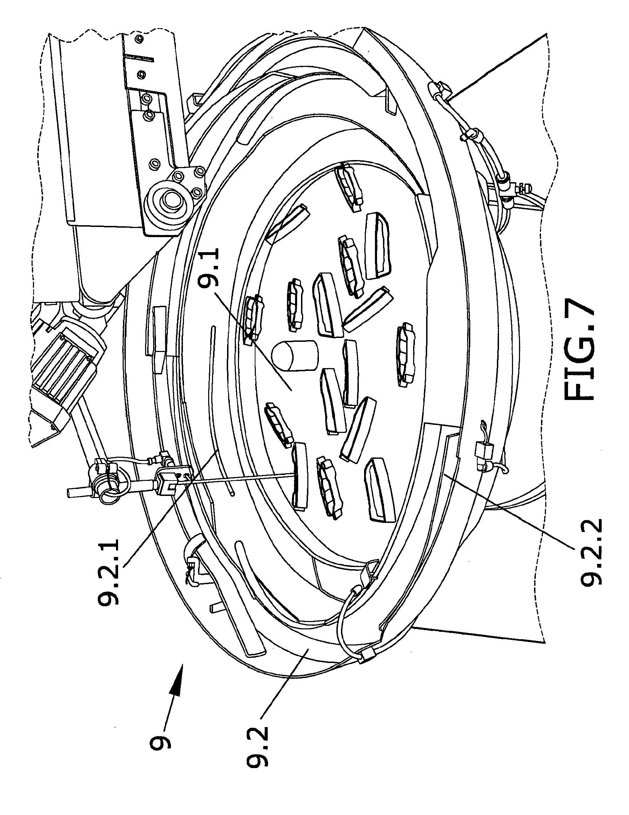

Figure 7 shows a perspective view of a rotating vibratory receptacle.

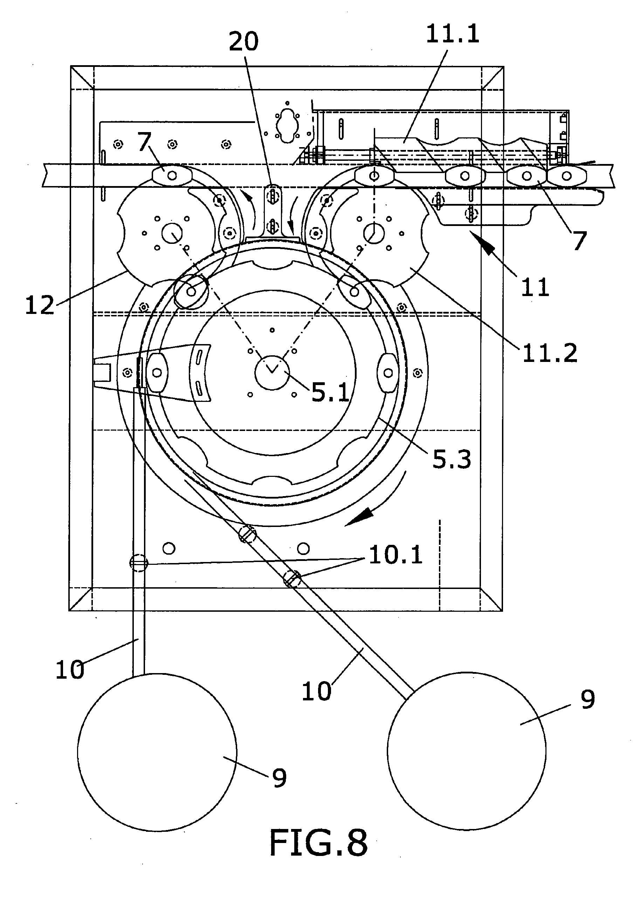

Figure 8 shows a plan view of a machine incorporating the device for placing handles on a bottle or demijohn.

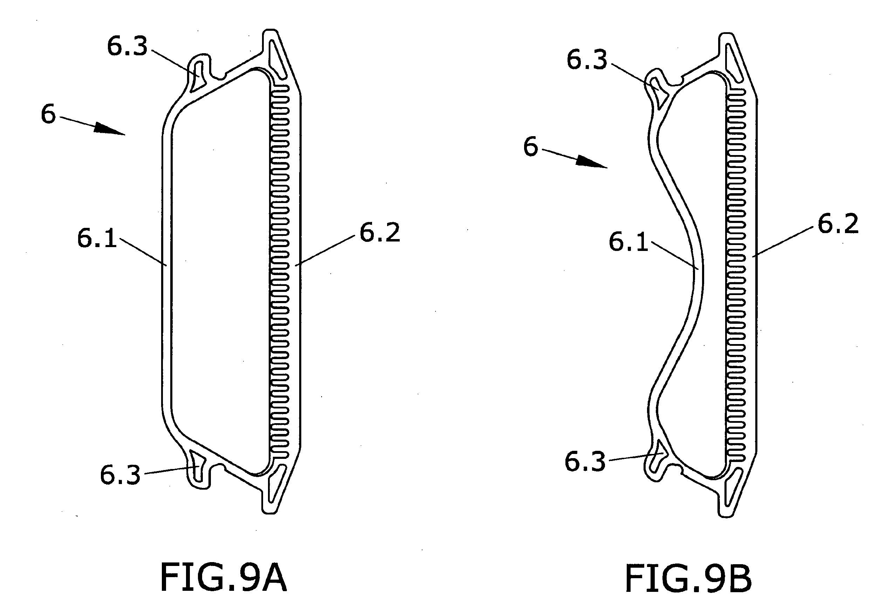

Figure 9A shows an elevation view of the handle in a non-deformed situation.
Figure 9B shows an elevation view of the handle in a deformed situation.
Figure 10 shows an elevation view of the bottle or demijohn on which the handle is placed.
Figure 11 shows a perspective view of a system for placing bottles or demijohns with a rotation axis so that they are arranged in the correct position before placing the handles.

### PREFERRED EMBODIMENT OF THE INVENTION

We shall now proceed to a detailed explanation of a preferred embodiment of the invention, where the device for placing a handle on a bottle or demijohn has 8 secondary clamp-holding arms (1) incorporated into as many secondary arm-holding carriages (2) that move along as many main arms (3) that are joined by means of pins (4) to a bushing (5.5) that is in turn joined to a central shaft (5.1) that can rotated about a frame (5).

Therefore, by the rotation of the central shaft (5.1) of the frame, the bushing (5.5) can be rotated and with it the 8 main arms (3) with their corresponding secondary arm-holding carriages (2) and their secondary clamp-holding arms (1).

The rotation of the main arms (3) about the bushing (5.5) through the pin (4) will be explained in more detail below.

The advancing and return movement of the secondary arm-holding carriages (2) on each main arm (3) is performed by means of guides (3.1) present on each main arm (3) and is the result of a pulley-shaped tracker (2.1) that is fixed to the secondary arm-holding carriage (2) following the path marked by a cam (5.2) that is fixed to the machine frame.

Due to the geometry of the cam (5.2), the pulley-shaped tracker (2.1) fixed to the carriage (2), and together with it the secondary clamp-holding arm (1) follow an advance movement towards the position of grabbing a handle (6) and a return movement towards the bushing (5.5) that is joined to the central shaft (5.1).

Every secondary clamp-holding arm (1) has on the end opposite the end on which it joins the carriage (2) a clamp (1.1) that allows grabbing the handle (6) by compressing it on at least one of its deformable ridges (6.1) so that the distance between the two opposing end ribs (6.3, 6.4) present on said ridge (6.1) is reduced and allows coupling the two opposing end ribs (6.3, 6.4) of the handle (6) into two opposing recesses (7.1.1, 7.1.2) of a cavity (7.1) of a bottle (7) or demijohn.

Similarly, the main arm (3) has a cam (3.2) that leads a pulley-shaped tracker (1.2) that is fixed to the secondary clamp-holding arm (1) that has the clamp (1.1) so that the secondary clamp-holding arm (1) may rotate due to the shape of the cam (3.2), which has a first straight section (3.2.1) that prevents the secondary clamp-holding arm (1) from rotating when the tracker (1.2) is in such section, and a second curved section (3.2.2) that transmits a rotation to the tracker (1.2) and therefore to the clamp (1.1) that is joined to the secondary clamp-holding arm (1).

Therefore, by combining the advancing and return movement due to the cam (5.2) present in the frame (5) and the rotation movement due to the cam (3.2) present in the main arm (3) the secondary clamp-holding arm (1) is made to advance from the central part of the frame (5) to grab the handle, to rotate as it returns in order to place the handle (6) in a position to be placed on the bottle (7) or demijohn and to newly advance in order to place the handle (6) opposite the bottle (7) or demijohn.

The secondary clamp-holding arm (1) has ribs (1.3) that alternate with the clamp (1.1), arranged so that each grip (1.1) of the clamp (1.1) is located between each rib (1.3) and vice versa.

Therefore, when the device for placing handles gets close to the handle (6) in order to grab it, the advancing movement is completed by an arrangement of the secondary clamp-holding arm (1) due to the cam (3.2) of the main arm (3) such that the two ribs (1.3) grab the inside of the handle (6) by opposite ends, which ends separate the deformable ridge (6.1) from the rest of the ridges that form the handle (6), amongst which is the holding (6.2) ridge.

In order to ensure that the ribs (6.3, 6.4) do not go through the entire width of the handle (6) when grabbed and to prevent its incorrect placement with respect to the housing in the bottle (7) or demijohn, said ribs (6.3, 6.4) are not introduced entirely into the handle (6) when grabbed, since they will later pass in front of a limiter (20) that pushes the handles (6) towards the inside of the ribs (6.3, 6.4), thus managing to finally adjust it into the exact position of insertion onto the container.

The collection and holding of the handle (6) in the position for it to be placed on the bottle (7) or demijohn is performed movement through a closing movement of the clamp (1.1) that is performed by means that transmit the closing movement to the clamp (1.1) that consist in a pneumatic cylinder (1.4) that is present on the secondary clamp-holding arm (1) and receives commands via an electronically-operated valve that in turn receives commands from a mechanical cam (not shown).

Thus, the handle is pressed on its deformable ridge (6.1) and its non-deformable holding ridge (6.2) such that the distance between the two end ribs (6.3, 6.4) present on the deformable ridge (6.1) is reduced so that they (6.3, 6.4) can be subsequently coupled into the two opposing recesses (7.1.1, 7.1.2) of the bottle (7) or demijohn.

In a last cross movement of the secondary clamp-holding arm (1) with respect to its advancing and returning direction, the clamp (1.1) places the handle (6) inside the cavity (7.1) of the bottle (7) or demijohn, where subsequently the clamp (1.1) stops exerting pressure on the deformable ridge (6.1), and the end ribs (6.3, 6.4) of the handle (6) are inserted into the opposing recesses (7.1.1, 7.1.2) of the bottle (7) or demijohn.

This cross movement is performed by means of a rotation of the main arm (3) about the pin (4) that joins it to the bushing (5.5) that is joined to the central shaft (5.1) of the frame (5), since the main arm (3) is joined by means of elastic means (8) to an element external to the main arm (3), in this case, the pin (4) of an adjacent main arm (3).

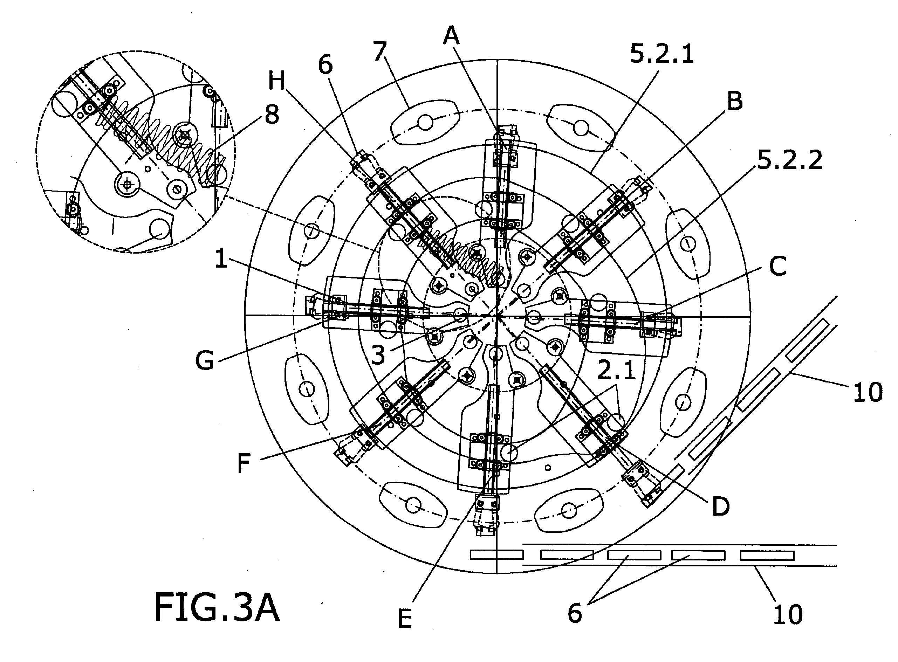

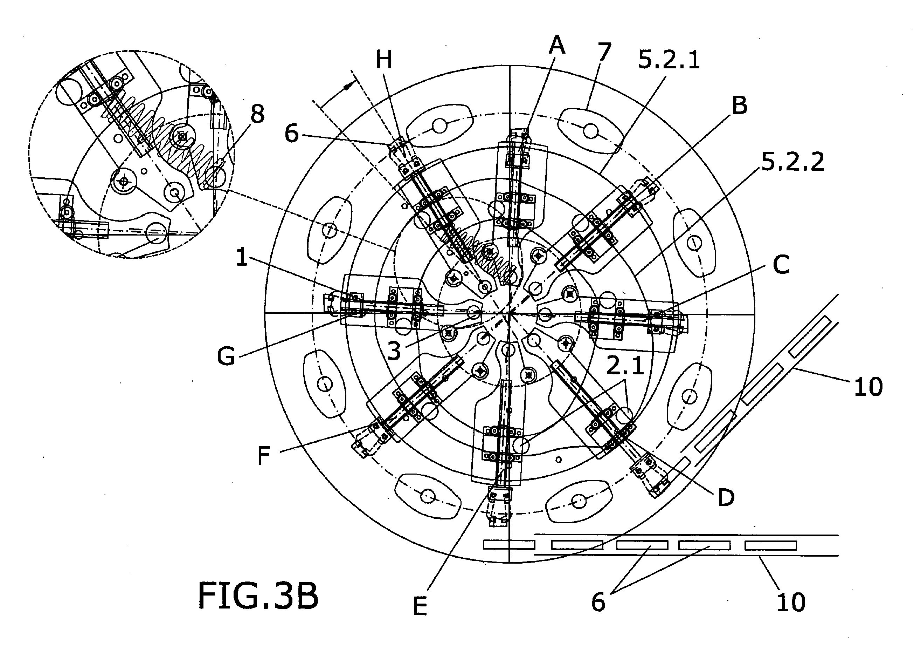

These elastic means (8) or spring are tense in the position prior to the placing of the handle (6), so that due to another cam (5.6) that is present in the frame (5) they release another tracker (3.3) that is fixed to the main arm (3), as observed in the detail of Figure 3B, the main arm (3) describes a movement originated by the recovery strength of the elastic means (8), which is a movement that describes a tangent line from the circumference described by any point of the main arm (3) when it rotates about the central shaft (5.1) and which is also a cross movement with respect to the radial advancing and returning direction of the secondary clamp-holding arm (1).

The machine that incorporates the previous device has handle-feeding means (9) that place each handle (6) with the holding ridge (6.2) in a lower horizontal position in order to be grabbed by the ribs (1.3) of the secondary clamp-holding arm (1).

These handle-feeding means (9) comprise a rotating vibration receptacle (9.1) that receives the handles, and an internal spiral ramp (9.2) that allows the handles (6) to climb up the ramp (9.2) due to the rotation and pushing of one handle (6) on another.

The spiral ramp (9.2) has stops (9.2.1) that are high and rotate the handles the ridges (6.1, 6.2) of which are not in contact with the ramp (9.2), placing them in contact due to the pressure of the high stop (9.2.1) upon the handle (6).

Similarly, it has high stops (9.2.2) that allow placing each handle (6) so that they can be grabbed by the ribs (1.3) of the secondary clamp-holding arm (1).

Since the previous arrangement also admits two variants of the handle when it is non-symmetrical, there are in the rotating vibratory receptacle (9.1) sensors (not shown) that identify when the handle is not placed correctly for its subsequent grabbing by the secondary clamp-holding arm (1) so that ejection means present in the ramp (9.2) return the handle (6) to the receptacle (9.1).

At the outlet of the ramp (9.2), the machine has transport means (10) that carry the handles (6) towards the device for placing handles on the demijohn, where these transport means (10) are a conveyor belt with a hatch (10.1) with an end stop that opens and closes, synchronising the placing of the handles (6) with the position of the clamp (1.1) when grabbing.

Moreover, the machine has bottle or demijohn feeding means (11) that allow directing these (7) towards the device for placing handles and which comprise a worm screw (11.1) with a step that is equal to the step between the holes in a rotating drum (11.2) in order to guide the bottles (7) or demijohns towards a rotating drum (5.3) that is integral to the central shaft (5.1) that rotates about the frame (5).

The bottles (7) or demijohns rest upon a support plate (5.4) joined to the central shaft (5.1) that rotates together with the rotating drum (5.3) and below it (5.3).

Similarly, the machine has means (12) to drive bottles or demijohns that withdraw the bottles (7) or demijohns from the rotating drum (5.3) that is integral to the central shaft (5.1) once the handle (6) has been placed on the bottle or demijohn.

In this embodiment, the machine that incorporates the device for placing handles has 8 secondary clamp-holding arms (1) that follow two cams (5.2) that are present on the frame such that the alternating secondary clamp-holding arms (1) A, C, E, G follow a first cam (5.2.1) and the alternating secondary clamp-holding arms (1) B, D, F, H follow a second cam (5.2.1), secondary clamp-holding arms A, C, E, G and secondary clamp-holding arms (1) B, D, F, H being fed by independent transport means (10), such that the speed of the machine doubles.

In bottles (7) or demijohns that do not have a rotation axis, it is not necessary to position them in front of the device for placing handles (6), since the feeding means (11) already place them in the correct position to receive the handle.

However, when the bottles (7) or demijohns are round or have a rotation axis it is necessary to position them opposite the cavity (7.1) of the bottle (7) where the handle (6) is to be placed with the device for placing handles, since the bottles (7) or demijohns are not directed in their advance through the feeding means (11).

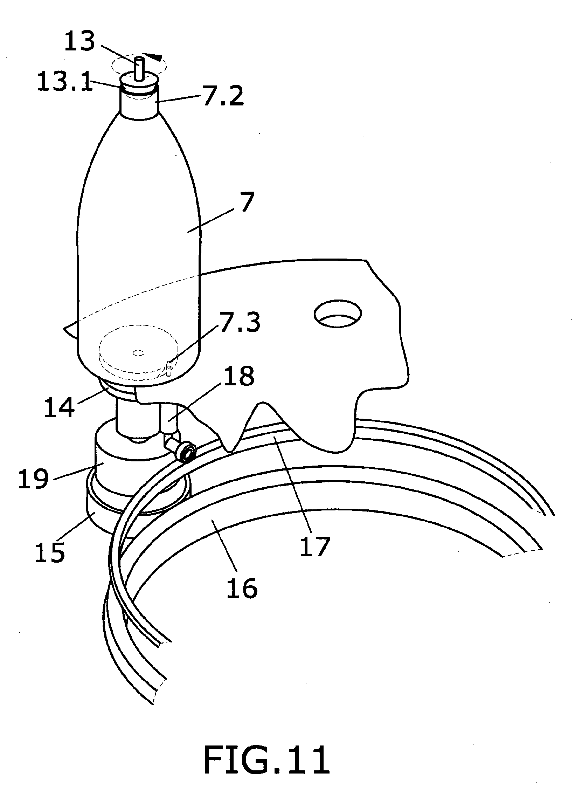

To do this, and as shown in Figure 11, the bottles (7) or demijohns, once they enter the support plate (5.4), are rotated by holding them with an upper head (13) that is joined to a plate that moves with the central shaft (5.1) (this joint is not shown in Figure 11), the lower end of which, the one inserted on the mouth (7.2) of the bottle (7) has a cone trunk (13.1) mounted upon a bearing in order for it to rotate freely (7).

The bottle (7) in turn rests upon a disk (14) that makes it rotate, actuated by a gear wheel (15) that also rotates along a guide (16).

Similarly, a cam (17) that is adjacent to the guide (16) leads a stop upward by means of a tracker (18) and elastic means that allow this stop to enter into a groove (7.3) that increases in depth and is present in the bottom of the bottle (7), such that when the stop of the tracker (18) is inside a groove (7.3) the bottle (7) is ready for the handle placing device to place the handle (6).

A clutch (19) placed on the shaft of the gear wheel (15) allows stopping the rotation of the support disk (14) of the bottle (7) when the stop is located in the groove (7.3) on the bottom of the bottle (7), so that it remains in the position for insertion of the handle (6).

The process for positioning a handle on a bottle or demijohn has the following steps:
- grabbing the handle from transporting means by means of a device for placing a handle on a bottle or demijohn, performed by an advance movement due to a cam (5.2) present on a frame (5),
- placing the handle on the bottle or demijohn by means of said device for placing handles, which is performed by combining the rotation movement due to a cam (3.2) present on a main arm (3), the advance movement due to a cam (5.2) present on the frame (5) and the cross movement due to elastic means (8) and a cam (5.1).

## Claims

1. A device for placing a handle on a bottle or demijohn, **characterised in that** it has at least one secondary arm (1) that has on one end a clamp (1.1) and ribs (1.3) that alternate with the clamp (1.1), so that each grip of the clamp (1.1) is arranged between each rib (1.3) and vice versa, that allows compressing and deforming the handle (6) on at least one ridge (6.1) thereof that is deformable, such that the distance between two end ribs (6.3, 6.4) present on said ridge (6.2) is reduced and allows the coupling of the two end ribs (6.3, 6.4) of the handle (6) in two opposing recesses (7.1.1, 7.1.2) of the bottle (7) or demijohn.

2. A device for placing a handle on a bottle or demijohn according to claim 1, **characterised in that** every secondary clamp-holding arm (1) is incorporated onto a secondary arm-holding carriage (2) that moves along a main arm (3) via guides (3.1) present on the main arm (3).

3. A device for placing a handle on a bottle or demijohn according to claim 2, **characterised in that** every main arm (3) is joined by a pin (4) to a central shaft (5.1) that can rotate about a frame (5).

4. A device for placing a handle on a bottle or demijohn according to claim 3, **characterised in that** the movement of the secondary arm-holding carriage (2) on the guides (3.1) is performed via a tracker (2.1) that is fixed onto the secondary arm-holding carriage (2) that follows the path indicated by a cam (5.2) that is fixed onto the frame (5).

5. A device for placing a handle on a bottle or demijohn according to claim 4, **characterised in that** due to the geometry of the cam (5.2), the tracker (2.1), and together with it the entire secondary clamp-holding arm (2) perform an advance movement towards the position where the clamp (1.1) of the secondary arm (1) grabs the handle (6), and a return movement towards the central shaft (5.1) to be located at the position for inserting the handle (6) on the bottle (7) or demijohn and a new advance and return movement to place the handle (6) on the bottle (7).

6. A device for placing a handle on a bottle or demijohn according to claim 2, **characterised in that** each main arm (3) has a cam (3.2) followed by a tracker (1.2) fixed to the secondary arm (1) where the clamp (1.1) is located, so that the secondary arm (1) can rotate due to the cam shape (3.2).

7. A device for placing a handle on a bottle or demijohn according to claim 6, **characterised in that** the cam (3.2) arranged on the main arm (3) has a first straight section (3.2.1) that prevents the secondary clamp-holding arm (1) from rotating when the tracker (1.2) is in such section, and a second curved section (3.2.2) that transmits a rotation to the tracker (1.2) and therefore to the clamp (1.1) that is joined to the secondary clamp-holding arm (1).

8. A device for placing a handle on a bottle or demijohn according to claims 5 and 7, **characterised in that** the advancing and return movement due to the cam (5.2) present on the frame (5) and the rotation movement due to the cam (3.2) present on the main arm (3) allow the secondary arm (1) to advance, return and rotate in order to grab the handle (6), and advance, return and rotate in order to place the handle (6) on the bottle (7).

9. A device for placing a handle on a bottle or demijohn according to claim 5, **characterised in that** when the secondary clamp-holding arm (1) gets close to the handle (6), the advancing movement is completed by an arrangement of the secondary arm (1) due to the cam (3.2) of the main arm (3) such that the two ribs (1.3) grab the inside of the handle (6) by opposite ends, which ends separate the deformable ridge (6.1) from the rest of the ridges (6.2) that form the handle (6).

10. A device for placing a handle on a bottle or demijohn according to claim 9, **characterised in that** due to a cross movement of the main arm (3) with respect to the advancing and returning direction of the secondary arm (1), the clamp (1.1) places the handle (6) inside a cavity (7.1) present on the bottle (7), where subsequently the clamp stops exerting pressure on the deformable ridge (6.1), and the end ribs (6.3) of the handle (6) are inserted into the opposing recesses (7.1.1, 7.1.2) of the bottle (7) or demijohn.

11. A device for placing a handle on a bottle or demijohn according to claim 10, **characterised in that** the cross movement is performed by means of a rotation of the main arm (3) about the pin (4) that joins it to the central shaft (5.1) of the frame (5), since the main arm (3) is joined by means of tense elastic means (8) to an element external to the main arm (3).

12. A machine that incorporates the device from the previous claims, **characterised in that** it has handle-feeding means (9) that place each handle (6) with the holding ridge (6.2) in a lower horizontal position in order to be grabbed by the ribs (1.3) of the secondary clamp-holding arm (1).

13. A machine according to claim 12, **characterised in that** the handle-feeding means (9) comprise a rotating vibration receptacle (9.1) that receives the handles, and an internal spiral ramp (9.2) that allows the handles (6) to climb up the ramp (9.2) due to the rotation and pushing of one handle (6) on another.

14. A machine according to claim 13, **characterised in that** the spiral ramp (9.2) has stops (9.2.1) that are high and rotate the handles the ridges (6.1, 6.2) of which are not in contact with the ramp (9.2), placing them in contact due to the pressure of the high stop (9.2.1) upon the handle (6) and high stops (9.2.2) that allow placing each handle (6) such that it can be grabbed by the ribs (1.3) of the secondary clamp-holding arm (1).

15. A machine according to claim 13, **characterised in that** at the outlet of the ramp (9.2), the machine has transport means (10) that carry the handles (6) towards the device for placing handles on the demijohn, where these transport means (10) are a conveyor belt with a hatch (10.1) that adapts the advance of the handles (6) to the movement of the clamp (1.1).

16. A machine according to claim 12, **characterised in that** it has bottle or demijohn feeding means (11) that allow directing these (7) towards the device for placing handles and which comprise a worm screw (11.1) with a step that is equal to the step between the holes in a rotating drum (11.2) in order to guide the bottles (7) or demijohns towards a rotating drum (5.3) that is integral to the central shaft that rotates about the frame (5).

17. A machine according to claim 12, **characterised in that** it has means (12) to drive bottles or demijohns that withdraw the bottles (7) or demijohns from the rotating drum (5.3) that is integral to the central shaft (5.1) once the handle (6) has been placed on the bottle or demijohn.

18. A machine according to claim 15, **characterised in that** has 8 secondary clamp-holding arms (1) that follow two cams (5.2) that are present on the frame such that first secondary clamp-holding arms (1) alternating with second secondary clamp-holding arms (1) follow a first cam (5.2.1) and the second secondary arms (1) alternating with the first arms follow a second cam (5.2.1), the first and second secondary arms (1) being fed by independent handle (6) transport means (10).

## Patentansprüche

1. Vorrichtung zum Anbringen eines Griffs an einer Flasche oder einem Glasballon (Ballonflasche), **dadurch gekennzeichnet, dass** sie mindestens einen sekundären Arm (1) besitzt, der an einem Ende mit einer Klammer (1.1) und mit Rippen (1.3) ausgestattet ist, die sich mit der Klammer (1.1) dergestalt abwechseln, dass auf jeden Vorsprung der Klammer (1.1) eine Rippe (1.3) folgt und umgekehrt, was die Kompression und Verformung des Griffs (6) auf mindestens einem verformbaren Kamm (Rücken) (6.1) dieses Griffs derart ermöglicht, dass sich der Abstand zwischen zwei Endlamellen (6.3, 6.4) am besagten Kamm (Rücken) (6.2) verringert und damit das Einfügen der beiden Endlamellen (6.3, 6.4) des Griffs (6) in zwei einander gegenüberliegende Vertiefungen (7.1.1, 7.1.2) der Flasche (7) oder des Glasballons gestattet.

2. Vorrichtung zum Anbringen eines Griffs an einer Flasche oder einem Glasballon gemäß Anspruch 1, **dadurch gekennzeichnet, dass** jeder sekundäre Klammerträgerarm (1) auf einem sekundären Armträgerwagen (2) installiert ist, der sich mittels am Hauptarm (3) angebrachten Führungen (3.1) entlang dieses Hauptarms (3) bewegt.

3. Vorrichtung zum Anbringen eines Griffs an einer Flasche oder einem Glasballon gemäß Anspruch 2, dadurch gekenntzeichnet, dass jeder Hauptarm (3) mithilfe eines Stiftes (4) an einer zentralen Achse (5.1) befestigt ist, die um einen Rahmen (5) drehbar gelagert ist.

4. Vorrichtung zum Anbringen eines Griffs an einer Flasche oder einem Glasballon gemäß Anspruch 3, **dadurch gekennzeichnet, dass** sich der sekundäre Armträgerwagen (2) mithilfe eines Trackers (Verfolgers, 2.1) entlang den Führungen (3.1) bewegt, wobei der Tracker am sekundären Armträgerwagen (2) befestigt ist, dessen Wegstrecke von einer am Rahmen (5) befestigten Nocke (5.2) vorgegeben wird.

5. Vorrichtung zum Anbringen eines Griffs an einer Flasche oder einem Glasballon gemäß Anspruch 4, **dadurch gekennzeichnet, dass** der Tracker (2.1) und mit ihm der gesamte sekundäre Armträgerwagen (2) gemäß der Geometrie der Nocke (5.2) eine Vorwärtsbewegung hin zu jener Position ausführt, in der die Klammer (1.1) des sekundären Arms (1) den Griff (6) aufnimmt, und daraufhin eine Rückkehrbewegung hin zur zentralen Achse (5.1) ausführt, um die Position zum Einsetzen des Griffs (6) an der Flasche oder dem Glasballon einzunehmen, wonach eine erneute Vorwärts und Rückkehrbewegung erfolgt, um den Griff (6) an der Flasche (7) anzubringen.

6. Vorrichtung zum Anbringen eines Griffs an einer Flasche oder einem Glasballon gemäß Anspruch 2, **dadurch gekennzeichnet, dass** jeder Hauptarm (3) mit einer Nocke (3.2) ausgestattet ist, der ein Tracker (1.2) folgt, welcher derart am sekundären Arm (1), an dem sich die Klammer (1.1) befindet, befestigt ist, dass sich der sekundäre Arm (1) um die Nockenform (3.2) drehen kann.

7. Vorrichtung zum Anbringen eines Griffs an einer Flasche oder einem Glasballon gemäß Anspruch 6, **dadurch gekennzeichnet, dass** die am Hauptarm (3) angebrachte Nocke (3.2) einen geraden ersten Abschnitt (3.2.1) besitzt, der die Drehung des sekundären Klammerträgerarms (1) dann verhinderk, wenn der Tracker (1.2) sich am genannten Abschnitt befindet, wobei ein zweiter gekrümmter Abschnitt (3.2.2) die Drehung auf den Tracker (1.2) und somit auch an die Klammer (1.1) überträgt, die am sekundären Klammerträgerarm (1) befestigt ist.

8. Vorrichtung zum Anbringen eines Griffs an einer Flasche oder einem Glasballon gemäß den Ansprüchen 5 und 7, dadurch gekenntzeichnet, dass die von der am Rahmen (5) angebrachten Nocke (5.2) veranlasste Vorwärts- und Rückkehrbewegung und die von der am Hauptarm (3) vorhandenen Nocke (3.2) verursachte Drehbewegung die erforderliche Vorwärts- und Rückwärtsbewegung und die Drehung des sekundären Arms (1) ermöglichen, um den Griff (6) aufzunehmen und ihn an der Flasche (7) anzubringen.

9. Vorrichtung zum Anbringen eines Griffs an einer Flasche oder einem Glasballon gemäß Anspruch 5, **dadurch gekennzeichnet, dass** die Vorwärtsbewegung des sekundären Kiammerträgerarms (1) bei Annäherung an den Griff (6) durch eine Anordnung dieses sekundären Arms (1) mittels der Nocke (3.2) des Hauptarms (3) derart zu Ende geführt wird, dass die beiden Rippen (1.3) an entgegengesetzten Enden ins Innere des Griffs (6) eingreifen, wobei diese Enden den verformbaren Kamm (Rücken) (6.1) von den anderen Kämmen (Rücken) (6.2) trennen, die gemeinsam den Griff (6) bilden.

10. Vorrichtung zum Anbringen eines Griffs an einer Flasche oder einem Glasballon gemäß Anspruch 9, **dadurch gekennzeichnet, dass** die Klammer (1.1) mittels einer Querbewegung des Hauptarms (3) gegenüber der Vorschub- und Rückkehrbewegung des sekundären Arms (1) den Griff (6) in einen in die Flasche (7) eingelassenen Hohlraum (7.1) legt, wonach die Klammer aufhört, Druck auf den verformbaren Kamm (Rücken) (6.1) auszuüben, und die Endlamellen (6.3) des Griffs (6) werden in die einander gegenüberliegenden Vertiefungen (7.1.1, 7.1.2) der Flasche (7) oder des Glasballons eingesetzt.

11. Vorrichtung zum Anbringen eines Griffs an einer Flasche oder einem Glasballon gemäß Anspruch 10, **dadurch gekennzeichnet, dass** die genannte Querbewegung durch eine Drehung des Hauptarms (3) um den Stift (4) geschieht, der diesen Arm an der zentralen Achse (5.1) des Rahmens (5) befestigt, denn der Hauptarm (3) ist über gespannte elastische Mittel (8) an einem Element befestigt, das sich außerhalb des Hauptarms (3) befindet.

12. Maschine, welche die Vorrichtung gemäß den vorangehenden Ansprüchen umfasst und zur Beschickung des Griffs ein Mittel (9) besitzt, das jeden Griff (6) mit seinem Haltekamm (Rücken) (6.2) in eine untere waagerechte Position befördert, wo er von den Rippen (1.3) des sekundären Klammerträgerarms (1) aufgenommen wird.

13. Maschine gemäß Anspruch 12, **dadurch gekennzeichnet, dass** die Mittel (9) zur Beschickung des Griffs eine rotierende Vibrationsdose (9.1) umfassen, welche die Griffe (6) aufnimmt, und außerdem eine interne spiralförmige Rampe (9.2), mit deren Hilfe die Griffe (6) aufgrund der Rotation eine Aufwärtsbewegung auf dieselbe Rampe (9.2) ausführen und aufeinander gesetzt werden.

14. Maschine gemäß Anspruch 13, **dadurch gekennzeichnet, dass** die spiralförmige Rampe (9.2) über hoch angebrachte Anschläge (9.2.1) verfügt, welche die Griffe, deren Haltekämme (Rücken) (6.1, 6.2) nicht mit der Rampe (9.2) in Kontakt stehen, in Drehung versetzen und durch den Druck des hoch angebrachten Anschlags (9.2.1) auf die Griffe den Kontakt herstellen, wobei andererseits die hoch angebrachten Anschläge (9.2.2) die Positionierung der Griffe (6) derart ermöglichen, dass sie sich von den Rippen (1.3) des sekundären Klammerträgerarms (1) aufnehmen lassen.

15. Maschine gemäß Anspruch 13, die am Ausgang der Rampe (9.2) mit Transportmitteln (10) ausgestattet ist, welche die Griffe (6) zur Vorrichtung transportieren, die sie am Glasballon anbringt, wobei diese Transportmittel (10) aus einem Förderband mit einer Klappe (10.1) bestehen, welche die Vorwärtsbewegung der Griffe (6) an die Bewegung der Klammer (1.1) anpasst.

16. Maschine gemäß Anspruch 12, die über eine Beschickungsvorrichtung (11) für die Flaschen oder Glasballons verfügt, welche die Ausrichtung der Flaschen (7) in Richtung zur Vorrichtung gestattet, welche die Griffe anbringt, wobei die Maschine eine Schneckenschraube (11.1) besitzt, deren Steigungsweite dem Abstand zwischen den Löchern einer rotierenden Trommel (11.2) gleicht, um auf diese Weise die Flaschen (7) oder Glasballons zu einer rotierenden Trommel (5.3) zu führen, die einen festen Teil der um den Rahmen (5) rotierenden zentralen Achse bildet.

17. Maschine gemäß Anspruch 12, die über Mittel (12) verfügt, um die Flaschen (7) oder Glasballons anzutreiben und sie von der rotierenden Trommel (5.3), die fest zur zentralen Achse (5.1) gehört, zurückzuziehen, sobald der Griff (6) an der Flasche oder dem Glasballon angebracht ist.

18. Maschine gemäß Anspruch 15, die acht sekundäre Klammerträgerarme (1) besitzt, die den beiden Nocken (5.2) folgen, welche derart am Rahmen angebracht sind, dass eine erste und eine zweite Gruppe der sekundären Klammerträgerarme (1) abwechselnd einer ersten Nocke und analog in umgekehrter Abfolge einer zweiten Nocke (5.2.1) folgen, wobei hiervon unabhängige Transportmittel (10) der Griffe (6) die ersten und die zweiten sekundären Arme (1) beschicken.

## Revendications

1. Dispositif destiné à placer une poignée sur une bouteille ou une bonbonne, **caractérisé en ce qu'**il présente au moins un bras secondaire (1) qui, sur une extrémité, est doté d'une pièce de serrage (1.1) et de nervures (1.3) alternées avec la pièce de serrage (1.1), de sorte que chaque griffe de la pièce de serrage (1.1) est agencée entre chaque nervure (1.3) et inversement, ce qui permet la compression et la déformation de la poignée (6) sur au moins une arête (6.1) de celle-ci qui peut être déformée, de sorte que la distance entre deux nervures d'extrémité (6.3, 6.4) présentes sur ladite arête (6.2) est réduite et permet l'accouplement des deux nervures d'extrémité (6.3, 6.4) de la poignée (6) dans deux évidements opposés (7.1.1, 7.1.2) de la bouteille (7) ou de la bonbonne.

2. Dispositif destiné à placer une poignée sur une bouteille ou une bonbonne selon la revendication 1, **caractérisé en ce que** chaque bras de support de pièce de serrage secondaire (1) est incorporé sur un chariot de support de bras secondaire (2) qui se déplace le long d'un bras principal (3) via des guides (3.1) présents sur le bras principal (3).

3. Dispositif destiné à placer une poignée sur une bouteille ou une bonbonne selon la revendication 2, **caractérisé en ce que** chaque bras principal (3) est relié par une broche (4) à un arbre central (5.1) qui peut tourner autour d'un cadre (5).

4. Dispositif destiné à placer une poignée sur une bouteille ou une bonbonne selon la revendication 3, **caractérisé en ce que** le mouvement du chariot de support de bras secondaire (2) sur les guides (3.1) est réalisé via un suiveur (2.1) qui est fixé sur le chariot de support de bras secondaire (2) qui suit le trajet indiqué par une came (5.2) qui est fixée sur le cadre (5).

5. Dispositif destiné à placer une poignée sur une bouteille ou une bonbonne selon la revendication 4, **caractérisé en ce que**, en raison de la géométrie de la came (5.2), le suiveur (2.1) et avec lui l'ensemble du bras de support de pièce de serrage secondaire (2) réalisent un mouvement d'avancée vers la position dans laquelle la pièce de serrage (1.1) du bras secondaire (1) saisit la poignée (6) et un mouvement de recul vers l'arbre central (5.1) devant être situé au niveau de la position d'insertion de la poignée (6) sur la bouteille (7) ou la bonbonne et un nouveau mouvement d'avancée et de recul pour placer la poignée (6) sur la bouteille (7).

6. Dispositif destiné à placer une poignée sur une bouteille ou une bonbonne selon la revendication 2, **caractérisé en ce que** chaque bras principal (3) est doté d'une came (3.2) suivie par un suiveur (1.2) fixé au bras secondaire (1) sur lequel la pièce de serrage (1.1) est située, de sorte que le bras secondaire (1) peut tourner grâce à la forme de la came (3.2).

7. Dispositif destiné à placer une poignée sur une bouteille ou une bonbonne selon la revendication 6, **caractérisé en ce que** la came (3.2) placée sur le bras principal (3) présente une première section droite (3.2.1) qui empêche le bras de support de pièce de serrage secondaire (1) de tourner, lorsque le suiveur (1.2) se trouve dans cette section et une seconde section incurvée (3.2.2) qui transmet une rotation au suiveur (1.2) et, par conséquent, à la pièce de serrage (1.1) qui est reliée au bras de support de pièce de serrage secondaire (1).

8. Dispositif destiné à placer une poignée sur une bouteille ou une bonbonne selon les revendications 5 et 7, **caractérisé en ce que** le mouvement d'avancée et de recul provoqué par la came (5.2) présente sur le cadre (5) et le mouvement de rotation provoqué par la came (3.2) présente sur le bras principal (3) permettent au bras secondaire (1) d'avancer, de reculer et de tourner afin de saisir la poignée (6) et d'avancer, de reculer et de tourner afin de placer la poignée (6) sur la bouteille (7).

9. Dispositif destiné à placer une poignée sur une bouteille ou une bonbonne selon la revendication 5, **caractérisé en ce que**, lorsque le bras de support de pièce de serrage secondaire (1) s'approche de la poignée (6), le mouvement d'avancée est terminé par un agencement du bras secondaire (1) provoqué par la came (3.2) du bras principal (3), de sorte que les deux nervures (1.3) saisissent l'intérieur de la poignée (6) par des extrémités opposées, lesquelles extrémités séparent l'arête déformable (6.1) du reste des arêtes (6.2) qui forment la poignée (6).

10. Dispositif destiné à placer une poignée sur une bouteille ou une bonbonne selon la revendication 9, **caractérisé en ce que**, en raison d'un mouvement transversal du bras principal (3) par rapport à la direction d'avancée et de recul du bras secondaire (1), la pièce de serrage (1.1) place la poignée (6) à l'intérieur d'une cavité (7.1) présente sur la bouteille (7), où, par la suite, la pièce de serrage arrête d'exercer une pression sur l'arête réformable (6.1) et les nervures d'extrémité (6.3) de la poignée (6) sont insérées dans les évidements opposés (7.1.1, 7.1.2) de la bouteille (7) ou de la bonbonne.

11. Dispositif destiné à placer une poignée sur une bouteille ou une bonbonne selon la revendication 10, **caractérisé en ce que** le mouvement transversal est réalisé par le biais d'une rotation du bras principal (3) autour de la broche (4) qui le relie à l'arbre central (5.1) du cadre (5), étant donné que le bras principal (3) est relié par le biais de moyens élastiques tendus (8) à un élément externe au bras principal (3).

12. Machine incorporant le dispositif des revendications précédentes, **caractérisée en ce qu'**elle présente des moyens d'alimentation de poignée (9) qui placent chaque poignée (6) avec l'arête de support (6.2) dans une position horizontale inférieure, afin d'être saisie par les nervures (1.3) du bras de support de pièce de serrage secondaire (1).

13. Machine selon la revendication 12, **caractérisée en ce que** les moyens d'alimentation de poignée (9) comprennent un réceptacle vibrant rotatif (9.1) qui reçoit les poignées, ainsi qu'une rampe en spirale interne (9.2) qui permet aux poignées (6) de monter sur la rampe (9.2) grâce à la rotation et à la poussée d'une poignée (6) sur une autre.

14. Machine selon la revendication 13, **caractérisée en ce que** la rampe en spirale (9.2) présente des butées (9.2.1) qui sont élevées et font tourner les poignées dont les arêtes (6.1, 6.2) ne sont pas en contact avec la rampe (9.2), les plaçant en contact grâce à la pression de la butée élevée (9.2.1) sur la poignée (6) et les butées élevées (9.2.2) qui permettent de placer chaque poignée (6) de sorte qu'elle peut être saisie par les nervures (1.3) du bras de support de pièce de serrage secondaire (1).

15. Machine selon la revendication 13, **caractérisée en ce que**, au niveau de la sortie de la rampe (9.2), la machine présente des moyens de transport (10) qui portent les poignées (6) vers le dispositif destiné à placer les poignées sur la bonbonne, dans laquelle ces moyens de transport (10) sont une brande transporteuse avec une trappe (10.1) qui adapte l'avancée des poignées (6) au mouvement de la pièce de serrage (1.1).

16. Machine selon la revendication 12, **caractérisée en ce qu'**elle présente des moyens d'alimentation de bouteille ou de bonbonne (11) qui permettent de les diriger (7) vers le dispositif destiné à placer des poignées et qui comprennent une vis sans fin (11.1) avec un pas qui est égal au pas entre les trous dans un tambour rotatif (11.2) afin de guider les bouteilles (7) ou bonbonnes vers un tambour rotatif (5.3) qui est intégré à l'arbre central qui tourne autour du cadre (5).

17. Machine selon la revendication 12, **caractérisée en ce qu'**elle présente des moyens (12) d'entraînement des bouteilles ou bonbonnes, qui retirent les bouteilles (7) ou bonbonnes du tambour rotatif (5.3) intégré à l'arbre central (5.1) une fois que la poignée (6) a été placée sur la bouteille ou la bonbonne.

18. Machine selon la revendication 15, **caractérisée en ce qu'**elle présente 8 bras de support de pièce de serrage secondaires (1) qui suivent deux cames (5.2) qui sont présentes sur le cadre, de sorte que des premiers bras de support de pièce de serrage secondaires (1) en alternance avec des seconds bras de support de pièce de serrage secondaires (1) suivent une première came (5.2.1) et les seconds bras secondaires (1) en alternance avec les premiers bras suivent une seconde came (5.2.1), les premiers et seconds bras secondaires (1) étant alimentés par des moyens de transport (10) de bouteille (6) indépendants.
